# EUROPEAN PATENT APPLICATION

(11) **EP 4 273 730 A1**
(43) Date of publication of application: **08.11.2023**
(21) Application number: 23171487.4
(22) Date of filing: 04.05.2023
(51) Int. Cl.: G06F 21/62, G06N 3/08, G06N 20/00

(54) **MULTI-PARTY MODEL TRAINING**

(30) Priority: 05.05.2022 US 202263364244 P; 24.06.2022 US 202263366996 P; 26.04.2023 US 202318307653
(71) Applicant: Palantir Technologies Inc., Denver, CO 80202 (US)
(72) Inventor: JAGASIA, Arnav, Denver, 80202 (US); NASTASA, Emanuel, Denver, 80202 (US); ARORA, Megha, Denver, 80202 (US)
(74) Representative: Sayer, Robert David

(57) **Abstract**

Methods and systems for collaboration between two or more parties to generate a model based on data from the parties without data to the another party. A system includes an aggregation system having computer storage devices configured to store a model and a plurality versions of an aggregated model, and instructions, and one or more processors configured to execute the plurality of computer readable instructions to receive a request, from one of the data owner systems, to update the aggregated model to include model revisions in a model version in the model set associated with the requesting data owner system; provide the model revisions to the other of the data owner systems; in response to receiving approval from all the other data owner system to update the aggregated model to include the model revisions, update the aggregated model with the model revisions and store the updated aggregated model; and provide the updated aggregated model to all of the data owner systems.

## Description

### INCORPORATION BY REFERENCE TO ANY PRIORITY APPLICATIONS

Any and all applications for which a foreign or domestic priority claim is identified in the Application Data Sheet as filed with the present application are hereby incorporated by reference under 37 CFR 1.57 for all purposes and for all that they contain.

### TECHNICAL FIELD

The present disclosure relates to systems and techniques for multi-party model training, e.g., generating a data processor through collaboration. More specifically, the present disclosure relates to generating a model for processing data through collaboration between a plurality of entities, each entity having its own non-shareable (e.g., private, confidential) data that is used to generate a collaborative model and where none of the data, e.g., raw data, is shared between the entities.

### BACKGROUND

Data sharing and collaboration are crucial for modern organizations. However, organizations can be hesitant to share with other entities data containing sensitive or proprietary information due to concerns relating to data privacy issues, data proprietary, or confidentiality issues, and/or concerns relating to being unable to meet data regulatory standards. Such issues can arise even though the organizations have legitimate purposes for doing so and in agreement to collaborate on a project. There are several approaches for preserving privacy during data collaboration, including de-identification techniques, using synthetic data, differential privacy, and confidential computing, but these solutions are not always feasible or easily accessible because they rely on specialized knowledge or capabilities. An example of a specific collaboration problem relates to multi-party training of the same machine learning model(s) where it is desired to use data belonging to a number of entities to effectively train a common machine learning model but the entities cannot share the data due each entities' data being sensitive, proprietary, private, confidential, and/or subject to regulatory standards.

There are many examples where collaboration without data sharing between companies is advantageous. In one example, pharma companies have invaluable data on patients diagnosed with rare diseases, if only they could enable selective use of this sensitive data to further medical research (via secure multi-party training of machine learning models) while keeping patient data private. In another example, banks and retailers could help each other with fraud analysis by leveraging client and transactions information if the setup wouldn't require them to share entire data assets with each other. In another example, to meet global "net zero" goals and assess our environment sustainability progress, we need the ability to consistently measure and collate technical data, e.g., emissions data from companies which may be generated and received from one or more sensors either directly or indirectly. Enabling coal, oil and gas companies to securely share larger datasets, including emissions captured by sensors and machines, is a game changer. Regulatory bodies rely on secure collaboration with financial, life sciences, and government organizations to ensure compliance with upcoming regulations. Such collaboration entails regulators being able to conduct investigations without being able to access an organizations private data or pose a threat to an organization's intellectual property. Also, even within organizations, teams often struggle to collaborate because data scientists, project managers, consultants, and IT operators do not have the same level of access. Selective data sharing such that these individuals are able to collaborate can unlock new potential for organizations while strengthening their data protection posture.

### SUMMARY

At least some of the embodiments of the inventions described herein are characterized by the independent claims. The dependent claims include optional features of some embodiments of the invention. The systems, methods, and devices described herein each have several aspects, no single one of which is solely responsible for its desirable attributes. Without limiting the scope of this disclosure, several non-limiting features will now be discussed briefly.

Details of one or more implementations of the subject matter described in this specification are set forth in the accompanying drawings and the description below. Other features, aspects, and advantages will become apparent from the description, the drawings, and the claims. Neither this summary nor the following detailed description purports to define or limit the scope of the inventive subject matter.

One aspect of the disclosure provides a system for collaboration between systems of data owners to generate a model which is based on data from each data owner without needing to sharing the actual data that is used to generate the model. In one implementation, the system comprising an aggregation system including one or more non-transitory computer readable storage devices configured to store a model and a plurality of model sets, each model set including one or more versions of a model, each model set associated with a data owner system, an aggregated model, and a plurality of computer readable instructions, and one or more processors configured to execute the plurality of computer readable instructions to receive information for a model associated with a first data set from a first data owner system, generate a model version based on the received information, store the model version in a first model set of the plurality of model sets, and control access to the first model set to prohibit access to the first model set of any data owner system except the first data owner system; receive information for a model associated with a second data set from a second data owner system, generate a model version based on the received information, store the model version in a second model set of the plurality of model sets, and control access to the second model set to prohibit access to the second model set of any data owner system except the second data owner system; receive a request, from one of the data owner systems, to update the aggregated model to include model revisions in a model version in the model set associated with the requesting data owner system; provide the model revisions to the other of the data owner systems; in response to receiving approval from all the other data owner system to update the aggregated model to include the model revisions, update the aggregated model with the model revisions and store the updated aggregated model; and provide the updated aggregated model to all of the data owner systems.

Embodiments of such systems can include other aspects. In some embodiments, the system further comprises the first data owner system, wherein the first data owner system includes one or more computer readable storage devices configured to store an aggregated model received from the aggregation system, store a first data set for generating information for the model associated with the first data owner system, and store a plurality of computer readable instructions, and one or more processors configured to execute the plurality of computer readable instructions to generate the information for the model associated with the first data owner system based on the first data set, and provide the information for the model associated with the first data owner system to the aggregation system. In some embodiments, the system further comprises the second data owner system, wherein the second data owner system includes: one or more computer readable storage devices configured to store an aggregated model received from the aggregation system, store a second data set for generating information for the model associated with the second data owner system, and store a plurality of computer readable instructions, and one or more processors configured to execute the plurality of computer readable instructions to generate the information for the model associated with the second data owner system based on the second data set, and provide the information for the model associated with the second data owner system to the aggregation system. In some embodiments, the aggregated model is a machine learning model. In some embodiments, the machine learning model includes a neural network, and the information received by the aggregation system includes nodal values of the neural network. In some embodiments, the one or more processors are configured to execute the plurality of computer readable instructions to generate and store a version of the aggregated model in the first model set, and change the version of the aggregated model in the first model set based on information received from the first data owner system. In some embodiments, the information received from the first data owner system includes a first security code, and wherein the one or more processors are further configured to execute the plurality of computer readable instructions to associate the first security code with each model version in the first model set that is generated using the received information. In some embodiments, the one or more processors are further configured to execute the plurality of computer readable instructions to control access to the first data model set such that the second data owner system is prohibited from accessing and knowing of the existence of any model version in the first model set data unless permission is provided to the aggregation system by the first data owner system. In some other embodiments of the system, the one or more processors are further configured to execute the plurality of computer readable instructions to receive information for a model associated with one or more other data sets from another data set owner system, generate a model version based on the received information, store the model version in another model set of the plurality of model sets, and control access to the another model set to prohibit access to the another model set of any data owner system except the another data owner system. In some other embodiments of the system, the one or more processors are further configured to execute the plurality of computer readable instructions to provide a trigger mechanism for initializing or starting a round of training to update the aggregated model based on one or more rules or criteria, and optionally comprising initializing or starting a round of training when the aggregation system has sufficient processing resources to perform the round of training based on a utilization parameter being, or falling below, a predetermined threshold. In some embodiments of the system, the approvals received from the other data owner systems may be generated automatically by said other data owner system(s) based on one or more rules or criteria.

Another innovation includes a computer-implemented method for collaborating between systems of data owners to generate a model based on data from each data owner system without sharing data used to generate the model, the method comprising receiving, at an aggregation system, information for a model associated with a first data set from a first data owner system, generating a model version based on the received information, storing the model version in a first model set of a plurality of model sets, and controlling access to the first model set to prohibit access to the first model set of any data owner system except the first data owner system; receiving, at the aggregation system, information for a model associated with a second data set from a second data owner system, generating a model version based on the received information, storing the model version in a second model set of the plurality of model sets, and controlling access to the second model set to prohibit access to the second model set of any data owner system except the second data owner system; receiving a request, from one of the data owner systems, to update the aggregated model to include model revisions in a model version in the model set associated with the requesting data owner system; providing the model revisions to the other of the data owner systems; in response to receiving approval from all the other data owner system to update the aggregated model to include the model revisions, updating the aggregated model with the model revisions and store the updated aggregated model; and providing access to the updated aggregated model to all of the data owner systems, wherein the method is performed by one or more computer hardware processors executing a plurality of computer readable instructions stored on non-transitory computer memory.

Embodiments of such methods can include other aspects. In some embodiments, the aggregated model is a machine learning model. In some embodiments, the machine learning model includes a neural network, and the information received by the aggregation system includes nodal values of the neural network. In some embodiments, the model revisions includes software code revisions to the aggregated model. In some embodiments, the method further comprises receiving, at the aggregation system, additional information from the first data owner system and revising the model version in the first model set based on the received information. In some embodiments of the method, information received from the first data owner system is associated with a first security code, the method further comprising associating the first security code with each model version in the first model set that is generated using the received information. In some embodiments of the method, information received from the first data owner system includes data associated with a first security code, the method further comprising prohibiting any other data owner that is not associated with the first security code from accessing the data received from the first data owner. In some embodiments of the method, a trigger mechanism may be provided for initializing or starting a round of training to update the aggregated model based on one or more rules or criteria, and optionally comprising initializing or starting a round of training when the aggregation system has sufficient processing resources to perform the round of training based on a utilization parameter being, or falling below, a predetermined threshold. In some embodiments, the approvals received from the other data owner systems are generated automatically by said other data owner systems based on one or more rules or criteria.

Another innovation includes a computer-implemented method for collaborating between systems of data owners to generate a model based on data from each client without sharing data used to generate the model, the method comprising receiving at an aggregation system, from a first client, information associated with a first data set, updating and storing a first version of a model based on the received information associated with the first data set, and controlling access to the first version of the model to prohibit access of any client except the first client; receiving at the aggregation system, from a second client, information associated with a second data set, updating and storing a second version of the model based on the received information associated with the second data set, and controlling access to the second version of the model to prohibit access of any client except the second client; receiving a request from the first client, to update an aggregated model stored on the aggregation system based on the first version of the model; providing the first version to the second client; in response to receiving approval from the second client to update the aggregated model, updating the aggregated model based on the first version of the model to form a revised aggregated model; and providing access to the revised aggregated model to the first and second clients, on the aggregation system, as the starting point to make new versions of the aggregated model based on the first, wherein the method is performed by one or more computer hardware processors executing a plurality of computer readable instructions stored on non-transitory computer memory. In some embodiments of the method, the aggregated model is a machine learning model. In some embodiments of the method, the machine learning model includes a neural network, and the information received by the aggregation system includes nodal values of the neural network. In some embodiments of the method, the model revisions includes software code revisions to the aggregated model.

According to other examples, there may be provided an apparatus comprising one or more processors and one or more memories, configured to perform the method of any preceding definition. According to other examples, there may be provided a computer program product comprising a computer-readable storage medium having program instructions embodied therewith, the program instructions executable by one or more processors to cause the one or more processors to perform the computer implemented method of any preceding definition.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 is a diagram illustrating one example of a system structured for multiple data owners to collaborate on a model, where the data of each data owner is used to generate the model but a data owner does not share their data with the other data owners or any other entity (i.e., without sharing data).
Figure 2 is a diagram illustrating an example of an aggregation server structured for storing multiple in-work versions of a model and an aggregated model that has been approved by all collaborators.
Figure 3 is a diagram illustrating an example of certain communications between multiple data owners and an aggregation system (e.g., an aggregation server), according to some embodiments.
Figure 4 is a block diagram of an example computing system configured to perform data collaboration.
Figure 5 is an example of a process flow for data collaboration.
Figure 6 is an example of a process flow for data collaboration.

### DESCRIPTION

As mentioned above, data sharing and collaboration are crucial for modern organizations. Embodiments of the technical solutions described herein, allow organizations to share, with other entities, data containing sensitive or proprietary information due to concerns relating to data privacy issues, data proprietary, confidentiality issues, and/or concerns relating to being unable to meet data regulatory standards. Such embodiments let clients join a collaborative space to perform work together where each client cannot make a change to the logic, transformations, and/or code in the collaborative space without the consent of all the other clients and/or relevant stakeholders. This ensures that each client knows how their data is being used and can assess whether any malicious logic will be implemented that could reveal privacy-sensitive details from their data. Example embodiments therefore relate to, among other things, data security whilst utilizing model parameters from multiple clients to provide, e.g., a more accurate model,

Implementations may be based on, by way of example, three aspects that are described in more detail below - mandatory access controls, branching, and approvals. Importantly, these are aspects that are generally familiar to software engineers which facilitates their use in the described system. The technical solutions discussed below allow multiple entities to collaborate for generating a data processor ("model") without sharing their data that is used to generate the model. Accordingly, no data owner ("collaborator" or "party") may be able to read the raw data of another collaborator or may repurpose the data of another collaborator for any other purpose. In such systems, no one party may have access to all data sources feeding a training pipeline for the model. However, the end product, e.g., a trained model, may be shareable. In addition, such systems may be scalable to make it easy to introduce new collaborators (e.g., new parties) where each new collaborator can have its own non-sharable data.

The disclosed technical solutions include systems and/or processes that allows a new party (or "client") to join a collaborative space with the intent to contribute data that will be used to train a learning model. For example, a process can define a new mandatory access control for the new client - this will gate user access to data from this client. In some embodiments, a system can also make the training data marked with the mandatory control available in the collaborative space, but such that only users who are eligible to have access to the mandatory control can have access to the data. In some embodiments, a system can add the data in a collaborative code space where the training logic resides, but this can be restricted such that it requires the other parties in the space to approve this addition in the collaborative code authoring space.

In some embodiments, any one client cannot make a change to the code in the collaborative space without the consent of the other clients to ensure that each client has control over how their data is being used. For example, if a client wants to tweak parameters of the model, e.g., hyper-parameters for training a model training, they can make a new branch off the code where all parties are collaborating ("main branch"). Proposed updates and changes to the main branch can be made by any party, but an aggregator system, which communicates with all the parties, may be configured to enforce control of the changes on the main branch. The main branch may be locked down by the aggregator system since the input data has mandatory controls from participating data owners, which means any code change will automatically require security approvals from all the clients. If all parties approve a change to the main branch, the aggregator system may merge the branch code (updated/revised code from a party) back with the main branch. If all parties do not approve the change, the code change may be rejected. In workflows, each client may have "veto-power" over the data processing and model training logic in the collaborative space and they can always decide if the code in the collaborative space poses any privacy risk to their data. As will be described below, this client approval process may be manual or it may be automated, for example whereby one or all of the clients runs an automated software tool which is configured to implement one or more rules or criteria for generating an approval that may be set by, for example, one or more respective data owners of said clients. The one or more rules or criteria may involve technical considerations.

### Terms

In order to facilitate an understanding of the systems and methods discussed herein, a number of terms are defined below. The terms defined below, as well as other terms used herein, should be construed to include the provided definitions, the ordinary and customary meaning of the terms, and/or any other implied meaning for the respective terms. Thus, the definitions below do not limit the meaning of these terms, but only provide exemplary definitions.

**Aggregator System:** A system in the collaborative space configured to store an aggregated model, receive updates from a plurality of systems suggesting changes to the aggregated model, provide updates of the aggregated model to each of the plurality of systems, and coordinate the updates to the aggregated model by communicating with each of the plurality of systems to obtain explicit permission from each of the plurality of systems to update the aggregated model. The Aggregator System does not receive data from a Party's proprietary data set. The Aggregator System receives security marking information, or a security code, from each party that relates to the data set of that party, and carries the appropriate security markings, or codes, through to a training output.

**Aggregated Model:** A model and/or other data processing code that is generated and controlled by the aggregator system based on updated models and communications (e.g., approvals) provided by a plurality of collaborating parties (which may also be referred to herein as "clients," and may also be referred to herein as "users" or "collaborators" or "data owners").

**Aggregator System:** A system which contains the aggregated model and coordinates changes to the aggregated model with each collaborating client.

**Access Controls:** can dictate how a client can access a particular piece of data, and there are many different models for access controls (mandatory controls, discretionary controls, role-based controls, attribute-based controls, etc.). Embodiments include mandatory access controls which govern if a client is eligible to see a given piece of data. Clients cannot pass on this access to other clients. In the described embodiments, each client's data has a unique mandatory access control applied to it in order to separate different clients' data from one another, and ensure clients can govern access by constraining which other clients, or other users (in case the aggregated model is passed on to others besides the clients collaborating in its generation) are eligible to get access to their resources. Mandatory controls can propagate to all data derived from the originally controlled data, unless the data owner explicitly allows for the removal of mandatory controls. Mandatory controls may be, and typically are, applied conjunctively, i.e., if multiple mandatory controls are applied to a resource, a party must meet all the corresponding eligibility criterion to have access to the resource.

**Branching and Version Control:** The aggregator system is controlled to give all parties the ability to reject any change in the collaboration space. When a party wants to merge their changes from a new branch (i.e., a party specific test branch) back into the main branch, the aggregator system uses approval automations to tag each party for review of the proposed change (e.g., code or access control changes) to the main branch or proposed change to the controls of the collaborative space (sometimes referred to herein as the "collaborative notebook"). Branches associated with different parties or clients may be implemented, e.g., initiated and/or executed, using a same or different respective computing systems, processors or virtual machines to ensure physical, e.g., as well as logical, security, but can feed into the same aggregated model 110.

**Collaborative Notebook:** stored collaboration results of the collaborative space including an aggregated model and approvals from the clients

**Collaborative Space:** An environment that includes systems of multiple parties each having their own data and includes an aggregator system which communicates with each of the parties' systems.

**Mandatory Access Controls (MAC):** MACs govern if a party is eligible to see a given piece of data. The Aggregator System implements the mandatory controls, their properties, and specifically how they are used to ensure that different parties' data can be separated from one another in the collaboration space.

**Party:** An entity that controls data that has a privacy, security, or sensitive aspect that prohibits letting another party process or control the data.

**Security Markings:** Eligibility criteria for accessing data. The party that owns a particular data (i.e., the data owner) controls the security markings, or codes, for their data.

**Updated Model:** A model provided by a specific client to the aggregator system that has been revised using a specific client's data.

**Version Control:** Version controls are in most environments where a client can write and execute code, but they play a key role, coupled with mandatory controls, in making sure that all clients consent to any changes to the code in the collaboration space. In embodiments of the solutions described herein, "branching" lets a client safely make edits to code on a separate copy of the codebase and then propose changes to the original codebase. When a client tries to merge their branch back into the main branch (i.e., proposes a change to the collaborative notebook), the aggregation system uses approval automations to tag each of the other clients participating in the collaboration for review of the code change in the collaboration space. Importantly, in addition to code changes, any changes around mandatory control updates/removal also trigger security approvals. For a branch to merge with the main branch, both code and security updates may require approval.

### Illustrative Examples

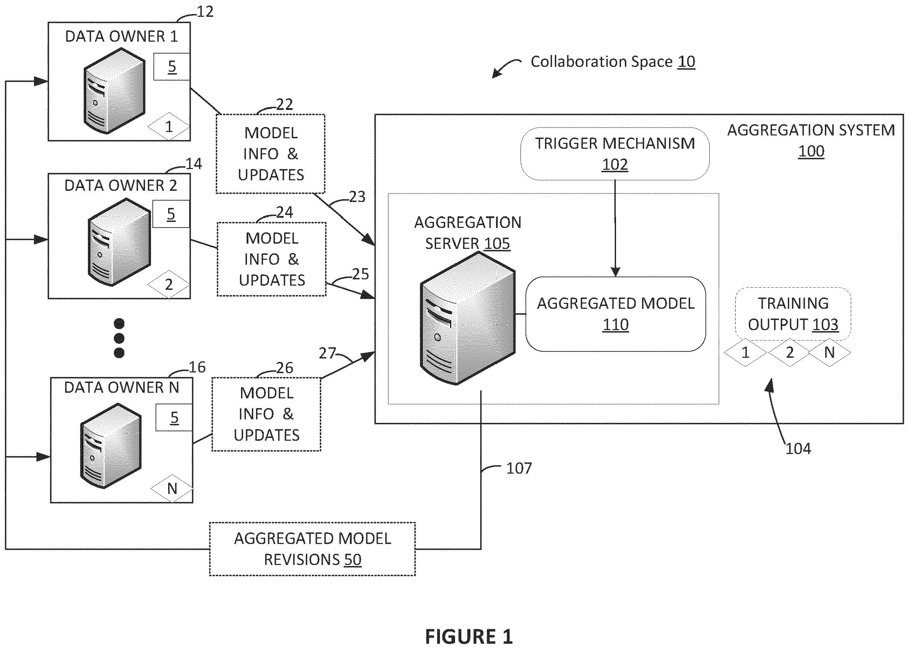

**Figure 1** is a diagram illustrating one example of a system structured for multiple data owners (e.g., data owners 1, 2, ..., N) to collaborate for generating a model, where the data controlled by each data owner is used to generate the "aggregated" model, but a data owner does not share their data, e.g., raw data, with the other data owners or any other entity that may subsequently use the model. For ease of reference, the "data owner" company or individual that owns some particular data that they use in collaborating with others to generate a model, and the system the data owner uses to communicate with other systems in the collaboration space 10, are collectively referred to as a "client" for ease or reference. Accordingly, the collaboration space 10 is configured for collaboration between multiple clients to generate an aggregated model where each client may contribute to the generation of the aggregated model using their own data, but each client's data is not shared with any another client. If a client wants to share certain data, they can set a security marking related to their data such that it is shared, as discussed below. In one example, the collaboration space 10 can be a multi-party model training system that allows data collaboration to take place between a plurality of clients to generate a model (e.g., a machine-learning model) without each client needing to share their actual data for the model generation collaboration to take place.

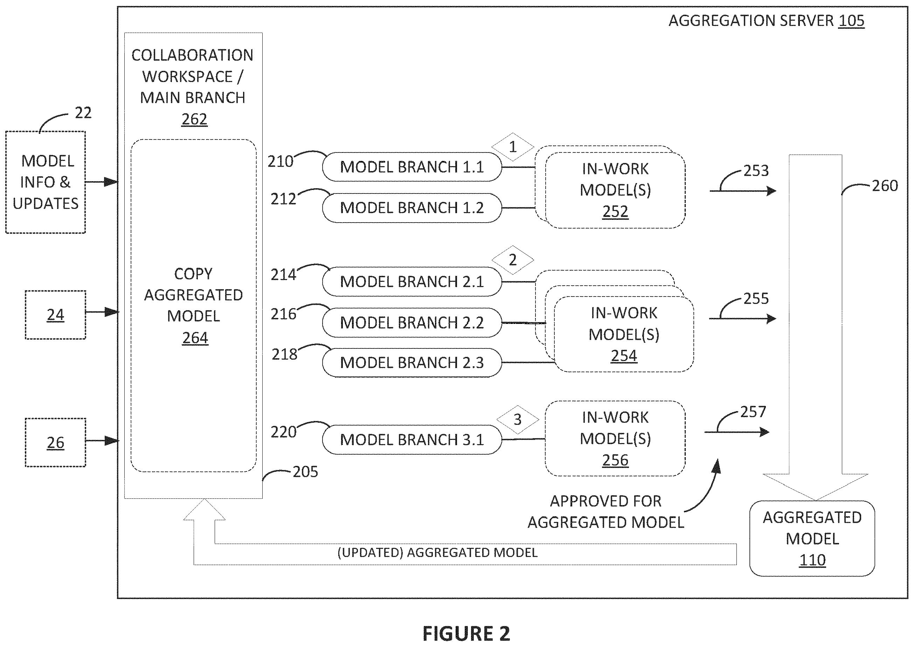

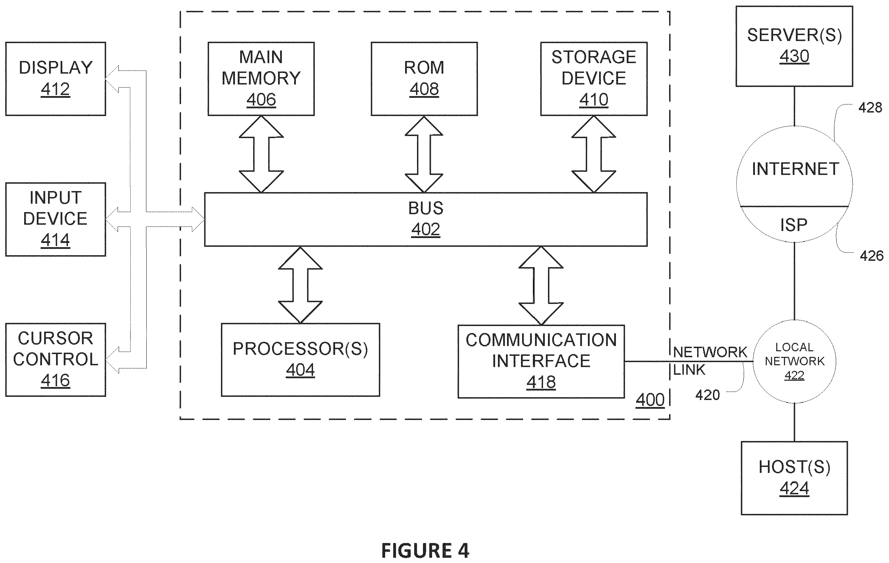

The collaboration space 10 can include a plurality of clients and an aggregation system 100 in communication with each of the clients. In the example illustrated in Figure 1, the collaboration space 10 includes a first client 12, the second client 14, and an nth client 16, and aggregation system 100. Each of the clients 12, 14, 16 controls data that they would like to use in collaboration with each other to generate a common "aggregated" model 110 that is based at least in part on each of the clients' data. The data can include, for example, images, parameters, statistical information, and/or software, and any other information that can be used to generate a model. In some embodiments, one or more of the clients 12, 14, 16 and the aggregation system 100 may be embodied on different portions of the same computer system. In other embodiments, the clients 12, 14, 16 and the aggregation system 100 are embodied on separate computer systems that are in communication with each other. For example, The clients 12, 14, 16 can be computer systems that are controlled by different data owners and at different geographic locations. In some embodiments, the clients 12, 14, 16 can each be a computing system similar to the computing system illustrated in Figure 4. In some embodiments, the aggregation server 105 and or the aggregation system 100 can also be a computing system similar to the computing system illustrated in Figure 4. During the course of the collaboration, the clients 12, 14, 16 provide information to the aggregation system 100 that may be used in a collaboration environment 205 (Figure 2) that all of the clients have access to, and which is sometimes referred to as the "main branch." To help achieve consistency of software in the collaboration environment, each of the clients may use a consistent custom software library 5 that may be provided to each client as part of organizing the collaboration. During the course of the collaboration, the clients 12, 14, 16 also often provide information to the aggregation system 100 that may be used in another branch that only a single client has access to so that they client can perform their own testing of updates to the current aggregated model.

The data of each client 12, 14, 16 can be associated with at least one security marking, or code. As an example, the data for client 12 is associated with a security marking "1" as depicted in a diamond in Figure 1. Similarly, the data for client 14 is associated with a security marking "2" and the data for client 16 is associate with a security marking "N." In various embodiments, data associated with a particular client may have multiple security markings. Also, different data associated with a particular client can each have its own security marking. For example, for data from two different data sources where both are controlled by a particular client, an image from a first source can be associated with a first security marking, and an image from a second source can have an associated with a second security marking that is different than the first security marking image.

As illustrated in Figure 1, client 12 can communicate model information and updates 22 to the aggregation system 100 using a communication link 23, first client 14 can communicate model information and updates 24 to the aggregation system 100 using a communication link 25, and second client 16 can communicate model information and updates 26 to the aggregation system 100 using a communication link 27. The communication links 23, 25, 27 can be, for example, wired or wireless communication links, and can include, for example, one or more local area network (LAN), wide area network (WAN), the Internet, or any other suitable communication network. As described in more detail in Figure 2, the aggregation system 100 can allow each client 12, 14, 16 to work on testing and updating a model in a common collaboration space (or a main branch). Or, a particular client can create one or more separate spaces, accessible only to the particular client, to work in for testing and updating a model, and these separate spaces may be referred to as a branch off of the main branch. Data communicated from each client to the aggregation system 100 will include its associated security marking. In the aggregation system 100, data communicated to the aggregation system 100 from one client that has a certain security marking associated with that client cannot be seen or accessed by another client unless they have explicit approval to access the data with that certain security marking. In other words, in embodiments of such systems, each client can provide model information, test data, and updates (e.g., model updates of code, images, parameters, etc.) for use to generate an aggregated model but they do not share their data, only the resulting aggregated model is shared between the clients. Accordingly, unless explicit approval is given by the data owner, which can be a manual or automated process, no client is able to read the data of another party or repurpose the data for any other means such that no one client has access to all data sources feeding the training pipeline. The system and method is therefore more secure. However, the end-product (e.g., a trained model) may be shareable. In some embodiments, a client (or data owner) can share a portion of their data to the aggregation system 100 to work on revisions to the model on the aggregation system 100, and the shared data will include a security marking. The aggregation system 100 does not allow any other client to access the shared data, or even know of the existence of another client's shared data in the aggregation system 100, unless explicit permission is provided by the sharing client.

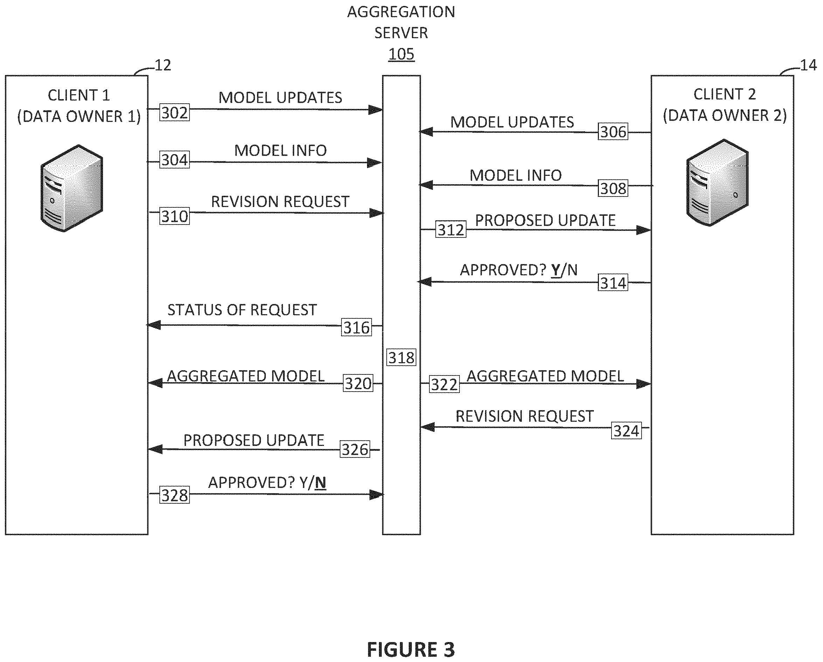

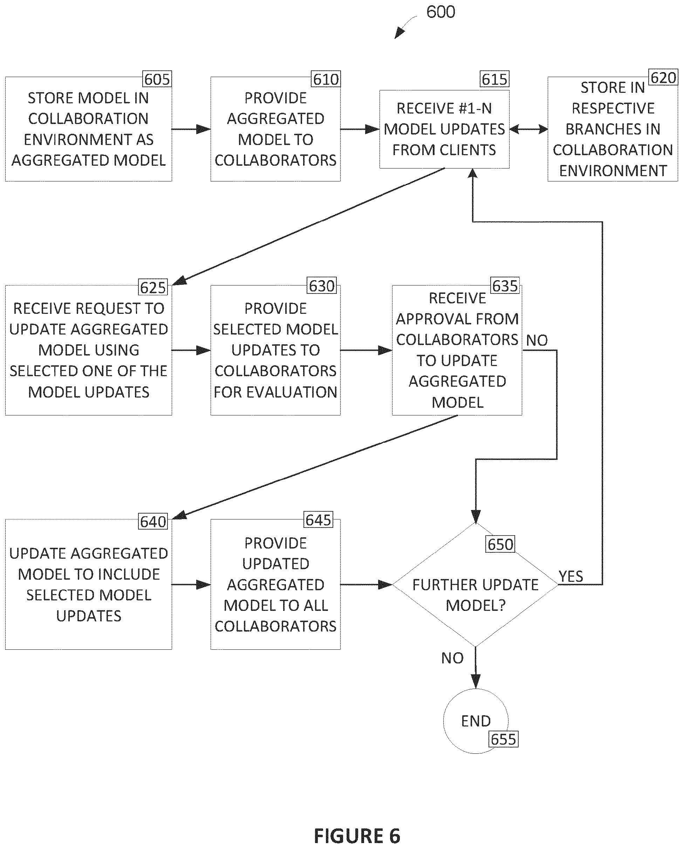

A trigger mechanism 102 of the aggregation system 100 provides the functionality to initialize or start a "round" of training to update a model (to generate the aggregated model). In this case, there may be provided a separate trigger mechanism 102 which executes logic/code to perform a round of training because no user token in the described setup has access to all the data and therefore no user can technically trigger the computation themselves. The trigger mechanism 102 may execute the logic/code to perform a round of training, for example, based on one or more rules or criteria established by data owners, such as periodically at set time intervals, a certain period after a revision from a client has been received and/or when the aggregation system 100 has sufficient processing resources to perform the round of training which may take into account one or more other processes that are being performed by the aggregation system at the same time. For example, the trigger mechanism 102 may monitor data indicative of the current utilization of processing resources of the aggregation system 100, e.g., CPU utilization. Utilization may be represented as a percentage and the trigger mechanism 102 may monitor for when utilization falls below a predetermined threshold before initializing or starting a round of training. Having an explicit trigger mechanism 102 adds more transparency and accountability as well since execution may only happen via this step. Once a round of training has started, when a client wants to incorporate their revisions to the model they can initiate a request to do so, and the aggregation system 100 coordinates approval of the changes by all the clients, as described further below (e.g., in reference to Figures 3 and 6).

As a result of generating an aggregated model 110, training output 103 may be generated. In some embodiments, the training output 103 may have security markings that are associated with all of the client training data that was used to generate the training output. The security markings may propagate through the aggregation system 100 such that any output generated using data with a certain security marking also is associated with the same security marking. In the example illustrated in Figure 1, the training output 103 was generated using data that has markings 1, 2, and N. For an entity/system to access the training output 103 with such security markings, that entity/system must have approval from all of the clients that the security markings are associated with.

Referring again to Figure 1, the aggregation system 100 includes an aggregation server(s) 105 that communicates with the collaborating clients 12, 14, 16 and stores the aggregated model 110. The aggregation server 105 receives information, i.e. the model information and model updates from the collaborating clients and structures workspaces or "branches" for each of the clients to work on refining the aggregated model 110 individually, as described further in reference to Figure 2. When a client wants to update the aggregated model 110 with revisions they have generated in one of their working branches, the aggregation system 100 communicates to the other clients for their approval of the model update. For example, the aggregation system 100 can send the proposed aggregated model revisions 50 via a communication link 107 to the other clients to approve the model revisions. If all the other clients approve the revisions, which may be a manual or automated process, the aggregation server 105 updates the aggregated model 110 with the revisions, otherwise the model update is rejected.

The collaboration space 10 architecture is scalable to make it easy to introduce new collaborator clients. The workflow can be easy to understand so that clients with varying levels of technical skills can effectively collaborate. If a client wants to tweak parameters for some particular processing (e.g., model training on some specialized data) they can create a new branch off the code or aggregator model where all parties are collaborating. Each party can add updates and propose changes to the main branch/existing aggregator model. An "aggregator" (e.g., the aggregation system 100 administrator) can enforce mandatory controls that can only change on the main branch with approval from all the data owners. When a client creates a new branch for their own specific testing, data on that new branch can be controlled by the mandatory controls indicated by the client's security markings, and all other branches (branches of the same client or a different client) can continue to propagate based on the mandatory controls.

**Figure 2** is a diagram illustrating an example of an aggregation server 105 structured for storing multiple in-work versions (or branches) of a model, and an aggregated model 110 that includes changes to the model that have been approved by all the client collaborators. As indicated above in reference to Figure 1, the aggregation server 105 can receive model information and model updates 22, 24, 26 from the clients 12, 14, 16. For each client, the aggregation server 105 can set up a collaboration environment 205 (the "main branch") for the clients 12, 14, 16 to work together to generate/update a model. Each client can also revise the aggregated model separately from any other client in one or more branches off of the main branch. As an example, as illustrated in Figure 2, the aggregation server 105 may provide a copy of the aggregated model 264 for the clients 12, 14, 16 to use for testing in the collaboration workspace / main branch 262. The main branch 262 can include, or use, computer storage, hardware processors, software processor emulations, and/or data (e.g., stored in in databases, files, tables etc.) which is accessible for use by all of the clients 12, 14, 16. Also, the aggregated model 264 and the in the main branch 262 can be used by any of the clients for testing. The clients may provide data (e.g., non-sensitive or non-private data for testing the model in the main branch 262.

The clients can also provide model information, updates, and/or data (sensitive or non-sensitive) for testing in a separate branch off of the main branch 262. A branch (or "model branch") can refer to computer storage, hardware processors, software processor emulations, and/or data (e.g., stored in in databases, files, tables etc.) which is accessible for use by only one or the clients, e.g., using access controls. In an example, the first client can provide model information and model updates 22 to the aggregation server 105. To revise and test changes to the aggregated model specific to the first client (e.g., using the first client's data), for the first client the aggregation server 105 can create one or more branches 210, 212 and these branches are used as workspaces for the first client. For example, the first client can be working on a revision to the aggregated model that is implemented in the first model branch 210. The first client may also be working on a revision to the aggregated model that is implemented in the second model branch 212, thus allowing the first client to work on two revisions to the aggregated model in parallel, e.g., for comparison of outputs, and in workspaces that are logically and/or physically separate from the workspaces of any of the other clients such that none of the other clients can see, access, or even know the existence of the first client's model branches 210 and 212 thus achieving security and privacy during the revision process. Similarly, for a second client the aggregation server 105 can create one or more model branches 214, 216, 218 and these branches are used as workspaces for the second client such that the second client can be working on a first revision to the aggregated model that is implemented in the model branch 214. The second client may also be working on a revision to the aggregated model that is implemented in the model branches 214, 216, thus allowing the second client to work on multiple revisions to the aggregated model in parallel and in workspaces that are logically and/or physically separate from the workspaces of any of the other clients such that none of the other clients can see, access, or even know the existence of the second client's model branches thus achieving security and privacy during the revision process. Similarly, for a third client the aggregation server 105 can create one or more model branches 220 and these branches are used as workspaces for the third client such that the third client can be working on a revision to the aggregated model that is implemented in the model branch 220 that is logically and/or physically separate from the workspaces of any of the other clients such that none of the other clients can see, access, or even know the existence of the third client's model branch thus achieving security and privacy during the revision process.

A model branch is, or can be associated with, an in-work model. For example, model branches 210, 212 are associated with two in-work models 252, model branches 214, 216, 218 are associated with three in-work models 254, and model branch 220 is associated with an in-work model 256. The model branches can include model information, model updates, and may include client data. Any information in a model branch that is associated with security marking, e.g., a security code, that carries that marking with it on the aggregation server 105 in the model branch. The proposed revisions to the aggregated model are captured in the in-work model that correspond to the model branch. Thus, while the model branch may include appropriately security-marked client data, the in-work model (revisions) do not include client data. When a client wants to have their revisions integrated into the aggregated model, the aggregation server 105 provides revisions only (e.g., the in-work model or changes that reflect the in-work model, thereby limiting the amount of data) to the other clients for review and approval (as described in reference to Figure 1), but the requesting client's data that was used to generate revisions to the model are not provided to the other clients such that they remain secure and compact. If the other clients approve of the revisions to the aggregated model 110, the approved revisions (e.g., the particular in-work model) is communicated 253, 255, or 257 to an aggregator 260 and the aggregated model 110 is updated with the approved revisions. In some embodiments, the aggregator 260 is a computer-implemented process that integrates the in-work model and the aggregated model. In some embodiments, the aggregator 260 is controlled by a person(s) who manually performs the integration of the revisions to the aggregated model. In some embodiments, the aggregator 260 is a combination of automated processes and control by a person(s) to perform the integration of the revisions to the aggregated model. In some embodiments, the aggregator 260 is as a result of one or more automated processes without control by a person(s).

In some embodiments, a particular model branch is working on its copy of the aggregated model such that if revisions from that particular model branch are approved by all the clients and they are the only approved revisions, the approved revisions to the aggregated model can be made relatively easily. In other embodiments, two or more model branches (from the same client for different clients) may have revisions that are approved by all the clients, in such cases updating the aggregated model with the approved revisions may be more complicated task. In some embodiments, the revisions to the aggregated model can include one or more of code, parameters, and any other information that affects how the model performs.

In an example, the model is a machine learning model. Embodiments of machine learning models can include one or more neural networks. Some aspects of various exemplary embodiments are described by referring to and/or using neural network(s). Various structural elements of neural network includes layers (input, output, and hidden layers), nodes (or cells) for each, and connections among the nodes. Each node is connected to other nodes and has a nodal value (or a weight) and each connection can also have a weight. The initial nodal values and connections can be random or uniform. A nodal value/weight can be negative, positive, small, large, or zero after a training session with training data set. The value of each of the connection is multiplied (or other mathematical operation) by its respective connection weight. The resulting values are all added together (or other mathematical operation). A bias (e.g., nodal value) can also be added (or other mathematical operation). A bias is sometimes constant (often - 1 or 1) and sometimes variable. This resulting value is the value of the node when activated. Another type of nodes is convolutional nodes, which are similar to aforementioned nodal characteristics, and are typically connected to only a few nodes from a previous layer, particularly adapted to decode spatial information in images/speech data. Deconvolutional nodes are opposite to convolutional nodes. That is, deconvolutional nodes tend to decode spatial information by being locally connected to a next layer. Other types of nodes include pooling and interpolating nodes, mean and standard deviation nodes to represent probability distributions, recurrent nodes (each with connections other nodes and a memory to store the previous value of itself), long short term memory (LSTM) nodes that may address rapid information loss occurring in recurrent nodes, and gated recurrent units nodes that are a variation of LSTM node by using two gates: update and reset. Where the model is machine learning model that includes neural network, revisions to the aggregated model may include one or more additional layers of the neural network, connections between the layers the neural network, and/or weights of nodes of the neural network.

**Figure 3** is a diagram illustrating an example of communications between multiple clients of an aggregation system, according to some embodiments. In particular, Figure 3 illustrates communications between three systems, the first client 12, the second client 14, and the aggregation server 105 for approving updates to an aggregated model. The first client 12 in the second client 14 can be working on revisions to the model in separate branches on the aggregation server (for example, as illustrated in Figure 3). Although Figure 3 illustrates an example with two clients 12, 14, similar communications can be performed for approval of model revisions between three or more clients.

Communications 302 and 304 indicate model updates and model information that the first client 12 provides to the aggregation server 105 which are used to work on revising the model in one or more branches associated with the first client 12. Communications 306 and 308 indicate model updates and model information that the second client 14 provides to the aggregation server 105 which are used to work on revising the model in one or more branches associated with the second client 14. Communication 310 indicates a revision request from the first client 12 to the aggregation server 105 to incorporate revisions it has made to in in-work model into the aggregated model. In response to the revision request, the aggregation server 105 provides a communication 312 to the second client 14 proposing to make the requested revision and seeking approval by the second client 14. The second client 14 reviews the revision request and manually or automatically approves or disapproves the revision, and in this case approves the revision in a communication 314 to the aggregation server 105. In this example, the aggregation server 105 provides a communication 316 that provides a status of the revision request to the first client 12, and makes the revision 318 to the aggregated model. The (updated) aggregated model may then be provided to the first client 12 and the second client 14. The (updated) aggregated model may also then be provided into workspaces for the first client 12 and the second client 14 for processing on the aggregation server 105 so that subsequent changes to the model can be made from the current aggregated model. Communication 324 indicates a request from the second client 14 to the aggregation server 105 to update the aggregated model. The aggregation server 105 provides a communication 326 to the first client 12 proposing to make the requested revision and seek approval by the first client 12. The first client 12 reviews revision requests and approves or disapproves revision, and in this case disapproves the revision and the communication 328. Because all the other clients (the first client 12) did not approve the revision, no revision to the aggregated model is performed based on the revision request in communication 324. In example embodiments, the proposed update 312 may additionally comprise (but does not necessarily) technical information indicative of, for example, the estimated amount of time and/or processing resources needed to update the aggregated model based on the revision, thereby providing the other clients (the first client 12 in this case) with such technical information that may guide the other clients as to whether or not to approve the requested revision. Approval may be a manual process, e.g., with the other clients presenting a user interface by which, via a single-click button or other graphical element, users of the other clients may issue approval or disapproval. In some example embodiments, approvals and/or disapprovals may be generated automatically by said other clients or other data owner systems based on one or more rules or criteria, e.g., based on whether such estimated technical information is below one or more predetermined thresholds, which may be absolute or percentage based values. The other clients may therefore comprise one or more software tools, e.g., applications, for this purpose and the one or more predetermined thresholds may be determined by respective users of said clients individually or based on collective agreement. Other rules or criteria may also be set, e.g., based on number of updates that can be approved within a predetermined time frame from a prior update and/or based on number of updates that an individual client may propose in the, or a different, predetermined time frame.

**Figure 4** is a block diagram of an example computing system 400 configured to perform data collaboration. In various embodiments, the computing system 400 can be one of the client systems, the aggregation system 100, or the aggregations server 105. Thus, computer system 400 illustrates an example upon which various embodiments of a collaboration system may be implemented.

Computer system 400 includes a bus 402 or other communication mechanism for communicating information, and a hardware processor, or multiple processors, 404 coupled with bus 402 for processing information such as data entries from one or more data stores. Hardware processor(s) 404 may be, for example, one or more general purpose microprocessors configured to execute model collaboration communications and functionality (e.g., generating an aggregated model based on inputs from a plurality of clients).

Computer system 400 also includes a main memory 406, such as a random access memory (RAM), cache and/or other dynamic storage devices, coupled to bus 402 for storing data entries and instructions to be executed by processor 404. Main memory 406 also may be used for storing temporary variables or other intermediate information during execution of model collaboration to be executed by processor 404. Such instructions, when stored in storage media accessible to processor 404, render computer system 400 into a special-purpose machine that is customized to perform the operations specified for model collaboration instructions. For example, operations for (i) receiving, at an aggregation system, information for a model associated with a first data set from a first data owner system, generating a model version based on the received information, storing the model version in a first model set of a plurality of model sets, and controlling access to the first model set to prohibit access to the first model set of any data owner system except the first data owner system, (ii) receiving, at the aggregation system, information for a model associated with a second data set from a second data owner system, generating a model version based on the received information, storing the model version in a second model set of the plurality of model sets, and controlling access to the second model set to prohibit access to the second model set of any data owner system except the second data owner system, (iii) receiving a request, from one of the data owner systems, to update the aggregated model to include model revisions in a model version in the model set associated with the requesting data owner system, (iv) providing the model revisions to the other of the data owner systems, (v) in response to receiving approval from all the other data owner system to update the aggregated model to include the model revisions, updating the aggregated model with the model revisions and store the updated aggregated model, and (vi) providing access to the updated aggregated model to all of the data owner systems.

Computer system 400 further includes a read only memory (ROM) 408 or other static storage device coupled to bus 402 for storing static information and instructions for processor 404. A storage device 410, such as a magnetic disk, optical disk, or USB thumb drive (Flash drive), etc., is provided and coupled to bus 402 for storing data and model aggregation information.

Computer system 400 may be coupled via bus 402 to a display 412, such as a cathode ray tube (CRT) or LCD display (or touch screen), for displaying graphical user interfaces or data entry information to a computer user. An input device 414, including alphanumeric and other keys, is coupled to bus 402 for communicating information and command selections to processor 404. Another type of user input device is cursor control 416, such as a mouse, a trackball, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

Computing system 400 may include a user interface module to implement a GUI that may be stored in a mass storage device as computer executable program instructions that are executed by the computing device(s). Computer system 400 may further, as described below, implement the techniques described herein using customized hard-wired logic, one or more ASICs or FPGAs, firmware and/or program logic which in combination with the computer system causes or programs computer system 400 to be a special-purpose machine. According to one embodiment, model aggregation and communications related to collaboration to generate an aggregated model steps herein are performed by computer system 400 in response to processor(s) 404 executing one or more sequences of one or more computer readable program instructions contained in main memory 406. Such instructions may be read into main memory 406 from another storage medium, such as storage device 410. Execution of the sequences of instructions contained in main memory 406 causes processor(s) 404 to perform the model aggregation and communications related to collaboration to generate an aggregated model described herein. In alternative embodiments, hard-wired circuitry may be used in place of or in combination with software instructions.

Various forms of computer readable storage media may be involved in carrying one or more sequences of one or more computer readable program instructions to processor 404 for execution. For example, the instructions may initially be carried on a magnetic disk or solid state drive of a remote computer. The remote computer can load the instructions into its dynamic memory and send the instructions over a telephone line using a modem. A modem local to computer system 400 can receive the data on the telephone line and use an infra-red transmitter to convert the data to an infra-red signal. Bus 402 carries the data to main memory 406, from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling to a network link 420 that is connected to a local network 422. For example, communication interface 418 may be an integrated services digital network (ISDN) card, cable modem, satellite modem, or a modem to provide a data communication connection to a corresponding type of telephone line. As another example, communication interface 418 may be a local area network (LAN) card to provide a data communication connection to a compatible LAN (or WAN component to communicate with a WAN). Wireless links may also be implemented. In any such implementation, communication interface 418 sends and receives electrical, electromagnetic or optical signals that carry digital data streams representing various types of information. In some embodiments, communication interface 418 may allow computing system 400 to receive and transmit data entry information from one or more code queries and/or code data stores.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication network now commonly referred to as the "Internet" 428. Local network 422 and Internet 428 both use electrical, electromagnetic or optical signals that carry digital data streams. The signals through the various networks and the signals on network link 420 and through communication interface 418, which carry the digital data to and from computer system 400, are example forms of transmission media.

Computer system 400 can send messages and receive data, including program code, through the network(s), network link 420 and communication interface 418. In the Internet example, a server 830 might transmit a requested code for an application program through Internet 428, ISP 426, local network 422 and communication interface 418. In some embodiments, computing system 400 may receive and transmit data entry or data set information from one or more databases across network link 420.

The received code may be executed by processor 404 as it is received, and/or stored in storage device 410, or other non-volatile storage for later execution. The received data entry or data set information may be stored in storage device 410 and manipulated, analyzed, or processed by processor 404 according to fingerprint generating and searching instructions stored in or received by computing system 400.

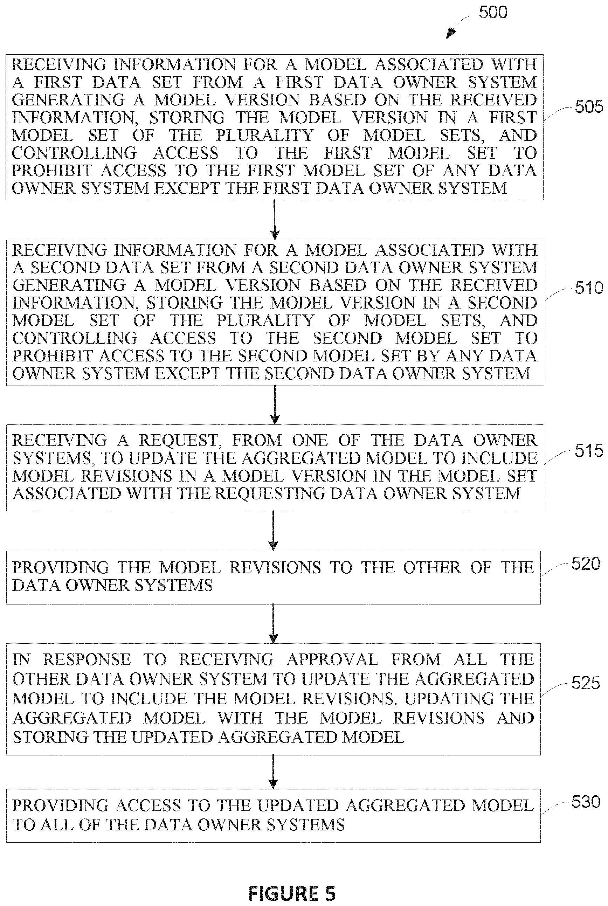

**Figure 5** is an example of one embodiment of a process 500 for data collaboration. For example, for collaborating between systems of data owners to generate a model based on data from each data owner system without sharing data used to generate the model, The process 500 can be performed by one or more computer hardware processors executing a plurality of computer readable instructions stored on non-transitory computer memory.

At block 505, the process 500 can include receiving, for example at an aggregation system, information for a model associated with a first data set from a first data owner system, generating a model version based on the received information, storing the model version in a first model set of a plurality of model sets, and controlling access to the first model set to prohibit access to the first model set of any data owner system except the first data owner system.

At block 510, the process 500 can include receiving, for example at the aggregation system, information for a model associated with a second data set from a second data owner system, generating a model version based on the received information, storing the model version in a second model set of the plurality of model sets, and controlling access to the second model set to prohibit access to the second model set of any data owner system except the second data owner system.

At block 515, the process 500 can include receiving a request, from one of the data owner systems, to update the aggregated model to include model revisions in a model version in the model set associated with the requesting data owner system.

At block 520, the process 500 can include providing the model revisions to the other of the data owner systems.

At block 525 the process 500 can include receiving approval from all the other data owner system to update the aggregated model to include the model revisions, updating the aggregated model with the model revisions and storing the updated aggregated model.

Finally, at block 530 the process 500 can include providing access to the updated aggregated model to all of the data owner systems.

**Figure 6** is an example of a data collaboration process 600 for a plurality of clients to generate and/or update a model where data each client uses to determine its updates to the model is not shared between the plurality of clients. The data collaboration process 600 can be implemented, for example, on the aggregation server illustrated in Figures 1 and 2. At block 605, the process 600 can store a model in a collaboration environment as an (initial) aggregated model. At block 610, the process 600 can provide the aggregated model to one or more collaborators, e.g., can provide access to the aggregated model to a plurality of clients (the "collaborators") in a collaboration space (or main branch) such that the clients all have access to the model. In some embodiments, the collaboration space can be implemented on the aggregation server 105 (Figure 1). At block 615 the process 600 can receive model updates from the clients. The model updates can include parameters and test data that a client will use with the model to determine revisions to make to the model. At block 620, the process can store the model updates in one or more respective branches (separate workspaces) in the collaboration environment, e.g., define one or more branches (separate workspaces) associated with each client in the collaboration environment, and store parameters and test data of a client in its respective branches. The branches associated with a client allow the client to test changes to the model using its own data in a workspace that only that client can access.

At block 625, when one of the clients (the "requesting client") wants to update the aggregated model, process 600 can receive a request to change (or update) the aggregated model and identifies a selected model update to make. At block 630, the process 600 can provide the selected model update to all of the other clients (the collaborators) for evaluation and approval of the change of the aggregated model. To make a change to the aggregated model as requested by one client, all of the other clients must approve the change. At block 635 the process 600 can receive, via manual or automatic processes, approval from all of the clients to update the aggregated model with the selected model update, and if approval is received, at block 640 the process 600 can update the aggregated model with the selected model updates. If approval of the selected model update is not received, the process 600 proceeds to block 650 where it can be determined if the process 600 for updating the aggregated model should continue to occur.

After the model is changed to include the selected update, at block 645 the process 600 can provide the updated aggregated model to the collaboration space to be further tested by the clients, and then proceeds to block 650. At block 650 the process 600 can determine if further updates to the aggregated model are desired, and if so, the process can revert to block 615. In some embodiments, the determination of whether further updates to the aggregation model are needed can be determined by querying each of the clients and receiving their feedback. In some embodiments, the determination of whether further updates to the aggregation model can be based on whether the aggregation model meets a predefined performance threshold, e.g., for a certain test data set. If further updates to the aggregated model are not desired, the data collaboration process 600 can proceed to block 655 where the process 600 ends.

### Implementation Details and Embodiments

Various embodiments of the present disclosure may be a system, a method, and/or a computer program product at any possible technical detail level of integration. The computer program product may include a computer readable storage medium (or mediums) having computer readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer readable storage medium (or mediums). Computer readable storage mediums may also be referred to herein as computer readable storage or computer readable storage devices.

The computer readable storage medium can be a tangible device that can retain and store data and/or instructions for use by an instruction execution device. The computer readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device.

Computer readable program instructions (as also referred to herein as, for example, "code," "instructions," "module," "application," "software application," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer readable program instructions may be callable from other instructions or from itself, and/or may be invoked in response to detected events or interrupts. Computer readable program instructions configured for execution on computing devices may be provided on a computer readable storage medium, and/or as a digital download (and may be originally stored in a compressed or installable format that requires installation, decompression or decryption prior to execution) that may then be stored on a computer readable storage medium. Such computer readable program instructions may be stored, partially or fully, on a memory device (e.g., a computer readable storage medium) of the executing computing device, for execution by the computing device. The computer readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart(s) and/or block diagram(s) block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above-embodiments may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows Server, etc.), Windows CE, Unix, Linux, SunOS, Solaris, Blackberry OS, VxWorks, or other suitable operating systems. In other embodiments, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

As described above, in various embodiments certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain embodiments, one or more of the computing devices and/or systems of the disclosure may include mobile computing devices, and user interfaces may be accessible through such mobile computing devices (for example, smartphones and/or tablets).

Many variations and modifications may be made to the above-described embodiments, the elements of which are to be understood as being among other acceptable examples. All such modifications and variations are intended to be included herein within the scope of this disclosure. The foregoing description details certain embodiments. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, etc. may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain embodiments require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various embodiments, it may be understood that various omissions, substitutions, and changes in the form and details of the devices or processes illustrated may be made without departing from the spirit of the disclosure. As may be recognized, certain embodiments of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

## Claims

1. A system for collaboration between systems of data owners to generate a model based on data from each data owner system without sharing data used to generate the model, the system comprising:
an aggregation system including
one or more non-transitory computer readable storage devices configured to store a model and a plurality of model sets, each model set including one or more versions of a model, each model set associated with a data owner system, an aggregated model, and a plurality of computer readable instructions, and
one or more processors configured to execute the plurality of computer readable instructions to
receive information for a model associated with a first data set from a first data owner system, generate a model version based on the received information, store the model version in a first model set of the plurality of model sets, and control access to the first model set to prohibit access to the first model set of any data owner system except the first data owner system;
receive information for a model associated with a second data set from a second data owner system, generate a model version based on the received information, store the model version in a second model set of the plurality of model sets, and control access to the second model set to prohibit access to the second model set of any data owner system except the second data owner system;
receive a request, from one of the data owner systems, to update the aggregated model to include model revisions in a model version in the model set associated with the requesting data owner system;
provide the model revisions to the other of the data owner systems;
in response to receiving approval from all the other data owner system(s) to update the aggregated model to include the model revisions, update the aggregated model with the model revisions and store the updated aggregated model; and
provide the updated aggregated model to all of the data owner systems.

2. The system of claim 1, further comprising the first data owner system, wherein the first data owner system includes:
one or more computer readable storage devices configured to store an aggregated model received from the aggregation system, store a first data set for generating information for the model associated with the first data owner system, and store a plurality of computer readable instructions, and
one or more processors configured to execute the plurality of computer readable instructions to generate the information for the model associated with the first data owner system based on the first data set, and provide the information for the model associated with the first data owner system to the aggregation system.

3. The system of claim 2, further comprising the second data owner system, wherein the second data owner system includes:
one or more computer readable storage devices configured to store an aggregated model received from the aggregation system, store a second data set for generating information for the model associated with the second data owner system, and store a plurality of computer readable instructions, and
one or more processors configured to execute the plurality of computer readable instructions to generate the information for the model associated with the second data owner system based on the second data set, and provide the information for the model associated with the second data owner system to the aggregation system.

4. The system of any preceding claim, wherein the aggregated model is a machine learning model, and optionally wherein the machine learning model includes a neural network, and the information received by the aggregation system includes nodal values of the neural network.

5. The system of any preceding claim, wherein the one or more processors are configured to execute the plurality of computer readable instructions to generate and store a version of the aggregated model in the first model set, and change the version of the aggregated model in the first model set based on information received from the first data owner system.

6. The system of any preceding claim, wherein the information received from the first data owner system includes a first security code, and wherein the one or more processors are further configured to execute the plurality of computer readable instructions to associate the first security code with each model version in the first model set that is generated using the received information.

7. The system of claim 6, wherein the one or more processors are further configured to execute the plurality of computer readable instructions to control access to the first data model set such that the second data owner system is prohibited from accessing and knowing of the existence of any model version in the first model set data unless permission is provided to the aggregation system by the first data owner system.

8. The system of any preceding claim, wherein the one or more processors are further configured to execute the plurality of computer readable instructions to receive information for a model associated with one or more other data sets from another data set owner system, generate a model version based on the received information, store the model version in another model set of the plurality of model sets, and control access to the another model set to prohibit access to the another model set of any data owner system except the another data owner system.

9. The system of any preceding claim, wherein the one or more processors are further configured to execute the plurality of computer readable instructions to provide a trigger mechanism for initializing or starting a round of training to update the aggregated model based on one or more rules or criteria, and optionally comprising initializing or starting a round of training when the aggregation system has sufficient processing resources to perform the round of training based on a utilization parameter being, or falling below, a predetermined threshold.

10. The system of any preceding claim, wherein the approvals received from the other data owner systems are generated automatically by said other data owner systems based on one or more rules or criteria.

11. A computer-implemented method for collaborating between systems of data owners to generate a model based on data from each data owner system without sharing data used to generate the model, the method comprising:
receiving, at an aggregation system, information for a model associated with a first data set from a first data owner system, generating a model version based on the received information, storing the model version in a first model set of a plurality of model sets, and controlling access to the first model set to prohibit access to the first model set of any data owner system except the first data owner system;
receiving, at the aggregation system, information for a model associated with a second data set from a second data owner system, generating a model version based on the received information, storing the model version in a second model set of the plurality of model sets, and controlling access to the second model set to prohibit access to the second model set of any data owner system except the second data owner system;
receiving a request, from one of the data owner systems, to update the aggregated model to include model revisions in a model version in the model set associated with the requesting data owner system;
providing the model revisions to the other of the data owner systems;
in response to receiving approval from all the other data owner system to update the aggregated model to include the model revisions, updating the aggregated model with the model revisions and store the updated aggregated model; and
providing access to the updated aggregated model to all of the data owner systems,
wherein the method is performed by one or more computer hardware processors executing a plurality of computer readable instructions stored on non-transitory computer memory.

12. The method of claim 11, wherein the aggregated model is a machine learning model, and optionally wherein the machine learning model includes a neural network, and the information received by the aggregation system includes nodal values of the neural network.

13. The method of claim 11 or claim 12, wherein the model revisions includes software code revisions to the aggregated model.

14. The method of any of claims 11 to 13, further comprising receiving, at the aggregation system, additional information from the first data owner system and revising the model version in the first model set based on the received information.

15. The method of any of claims 11 to 14, wherein information received from the first data owner system is associated with a first security code, the method further comprising associating the first security code with each model version in the first model set that is generated using the received information, and optionally wherein the method further comprises prohibiting any other data owner that is not associated with the first security code from accessing the data received from the first data owner.
